# FASCICULE DE BREVET EUROPEEN

(11) **EP 2 217 659 B1**
(45) Date de publication et mention de la délivrance du brevet: **21.11.2018**
(21) Numéro de dépôt: 08856402.6
(22) Date de dépôt: 01.12.2008
(51) Int. Cl.: C08L 51/06, C08K 3/16, C08K 3/22, C08L 77/00, C08L 77/02, C08L 77/06, C08K 7/14

(54) **COMPOSITION POLYAMIDE STABILISEE VIS-A-VIS DE LA CHALEUR ET DE LA LUMIERE**
HITZE- UND LICHTSTABILISIERTE POLYAMIDZUSAMMENSETZUNG
HEAT- AND LIGHT-STABILISED POLYAMIDE COMPOSITION

(30) Priorité: 04.12.2007 FR 0708445
(43) Date de publication de la demande: 18.08.2010
(73) Titulaire: RHODIA OPERATIONS, 93306 Aubervilliers (FR)
(72) Inventeur: PEDUTO, Nicolangelo, I-20131 Milano (IT)
(74) Mandataire: Schuck, Alexander
(86) Numéro de dépôt international: PCT/EP2008/066528
(87) Numéro de publication internationale: WO 2009/071507

(56) Documents cités:
- EP-A- 0 585 056
- WO-A1-95/35347
- DE-A1- 10 011 452
- US-A- 3 795 523
- DATABASE WPI Week 199421 Thomson Scientific, London, GB; AN 1987-104916 XP002483129 -& JP 06 043551 B (MITSUBISHI CHEM IND LTD) 8 juin 1994 (1994-06-08)

## Description

L'invention concerne une composition polyamide stabilisée vis-à-vis de la chaleur et de la lumière comprenant un système de stabilisation comprenant de l'oxyde de cuivre et du KBr, présentant un excellent maintien des propriétés mécaniques après une exposition à la chaleur ou à la lumière. L'invention concerne aussi un procédé de fabrication de ces compositions et notamment l'utilisation de ces compositions pour la réalisation d'articles dans le domaine de l'automobile.

Le polyamide est un polymère synthétique largement utilisé pour la fabrication de divers articles, tels que des pièces moulées et/ou injectées. Le polyamide peut subir des dégradations lorsqu'il est soumis à des éléments ou conditions externes tels que les rayons UV, la chaleur, et/ou les intempéries. Des dégradations peuvent également être induites par la chaleur utilisée au cours de sa fabrication et/ou de sa mise en forme. Cette instabilité se traduit par des dégradations, des pertes de propriétés mécaniques, et des changements de couleur. Ces problèmes peuvent devenir critiques pour un certain nombre d'applications, tels que notamment des pièces dans le domaine de l'automobile qui sont notamment soumises à des chaleurs importantes.

Pour améliorer la stabilité vis-à-vis de la chaleur et/ou de la lumière des polyamides, il est connu de leur associer des agents stabilisants particuliers. De nombreux additifs sont commercialisés à cet effet. On connait par exemple l'utilisation de l'iodure de cuivre, notamment en association avec d'iodure de potassium qui est dans la plupart des cas utilisé et qui fournit de bonnes propriétés de stabilisation. Il est également connu d'utiliser des additifs plus complexes tels que composés anti-oxydants phénoliques encombrés, des stabilisants présentant au moins un motif amine encombrée de type HALS ou des stabilisants phosphorés.

Le document EP 0 585 056 décrit une composition comprenant une résine polyamide (A), une résine polyphénylène éther modifiée (B), une charge fibreuse minérale (C), une charge minérale poudreuse (D), une résine époxy (E), et un composé cuivre (F-1) et/ou une résine phénolique poudreuse (F-2).
Le document DE 100 11 452 décrit un matériau de moulage polyamide résistant à l'hydrolyse pour une utilisation avec des techniques d'injection gaz.

Toutefois, il existe un besoin d'obtenir des compositions polyamides encore plus performantes au niveau de la stabilisation vis-à-vis de la chaleur et de la lumière, et à moindre cout.

La demanderesse a mis au point une nouvelle composition polyamide permettant d'obtenir un excellent maintien des propriétés mécaniques après une longue exposition à la chaleur et à la lumière. Ces compositions présentent également l'avantage de maintenir leur couleur initiale, même après une longue exposition à la chaleur et à la lumière.

La présente invention concerne une composition comprenant au moins une matrice polyamide, un oxyde de cuivre et du KBr, telle que définie à la revendication 1.

L'oxyde de cuivre est du Cu₂O (oxyde cuivreux). L'oxyde de cuivre peut se présenter sous la forme de poudre..

La composition peut également comprendre d'autres agents stabilisants à la chaleur et/ou la lumière tels que le KI, les composés phénoliques encombrés, des stabilisants présentant au moins un motif amine encombrée de type HALS, ou des stabilisants phosphorés organiques ou inorganiques, tel que de l'hypophosphite de sodium ou de manganèse.

La composition polyamide comprend du Cu₂O et du KBr, de 0,009 % à 1,2 % en poids de Cu2O et 0,1 % à 1,2 % en poids de KBr, par rapport au poids du polyamide dans la composition.

Le polyamide de l'invention est notamment choisi dans le groupe comprenant les polyamides obtenus par polycondensation d'au moins un diacide carboxylique aliphatique avec une diamine aliphatique ou cyclique comme le PA 6.6, PA 6.10, PA 6.12, PA 12.12, PA 4.6, MXD 6 ou entre au moins un diacide carboxylique aromatique et une diamine aliphatique ou aromatique comme les polytéréphtalamides, polyisophtalamides, polyaramides, ou leur mélange et (co)polyamides. Le polyamide de l'invention peut aussi être choisi dans les polyamides obtenus par polycondensation d'au moins un aminoacide ou lactame sur lui-même, l'amino-acide pouvant être généré par l'ouverture hydrolytique d'un cycle lactame tels que, par exemple PA 6, PA 7, PA 11, PA 12, ou leur mélange et (co)polyamides. Comme type de copolyamide on peut notamment citer le polyamide 6/66.

On préfère particulièrement les polyamides de type 6 et les polyamide de type 66. On entend par polyamide de type 6 un polyamide comprenant au moins 90 % en poids de résidus de monomères caprolactame ou aminocaproïque. On entend par polyamide de type 66 un polyamide comprenant au moins 90 % en poids de résidus de monomères acide adipique et hexaméthylènediamine.

Les polyamides peuvent présenter une viscosité apparente en phase fondue comprise entre 30 et 1200 Pa.s, mesuré selon la norme ISO 11443 à un taux de cisaillement de 1000 s⁻¹ et une température de 250°C, notamment pour les polyamide de type 6 ; ou une viscosité apparente en phase fondue comprise entre 30 et 700 Pa.s, mesuré selon la norme ISO 11443 à un taux de cisaillement de 1000 s⁻¹ et une température de 280°C, notamment pour les polyamide de type 66.

On peut notamment utiliser des polyamides de poids moléculaires variables par addition avant ou pendant la polymérisation des monomères de polyamide, ou encore en voie fondue à l'extrusion, de monomères modifiant la longueur des chaînes, tel que notamment des composés difonctionnels et/ou monofonctionnels présentent des fonctions amines ou acides carboxyliques capables de réagir avec les monomères du polyamide ou le polyamide.

Par acide carboxylique, on entend les acides carboxyliques et leurs dérivés, tels que les anhydrides d'acide, les chlorures d'acide et les esters, par exemple. Par amine, on entend les amines et leurs dérivés capables de former une liaison amide

On peut utiliser au début, en cours ou en fin de polymérisation tout type d'acides mono- ou di-carboxylique, aliphatiques ou aromatiques ou tout types d'amines mono- ou di-amines, aliphatiques ou aromatiques.

On peut utiliser tout particulièrement un polyamide de type 66, c'est-à-dire un polyamide obtenu au moins à partir d'acide adipique et d'hexaméthylène diamine ou de leurs sels tels que l'adipate d'hexaméthylènediamine, pouvant éventuellement comprendre d'autres monomères de polyamide. On peut notamment utiliser comme polyamide un polyamide de type 66 obtenu par ajout en polymérisation d'un excès d'hexaméthylènediamine et d'acide acétique ou un polyamide de type 66 obtenu par ajout en polymérisation d'acide acétique.

Des polyamides selon l'invention peuvent aussi être obtenus par mélange, notamment en fondu. On peut par exemple mélanger un polyamide avec un autre polyamide, ou un polyamide avec un oligomère de polyamide, ou encore un polyamide avec des monomères modifiant la longueur des chaînes, tel que notamment des diamines, diacides carboxyliques, monoamines et/ou monoacides carboxyliques. On peut notamment ajouter au polyamide de l'acide isophthalique ou de l'acide benzoïque, par exemple à des teneurs d'environ 0,2 à 1 % en poids.

La composition de l'invention peut également comprendre les copolyamides dérivés notamment des polyamides ci-dessus, ou les mélanges de ces polyamides ou (co)polyamides.

On peut également utiliser des polyamides branchés de haute fluidité notamment obtenus par mélange en polymérisation, en présence des monomères de polyamide, d'au moins un composé multifonctionnel comprenant au moins 3 fonctions réactives identiques de type fonction amine ou fonction acide carboxylique.

On peut également utiliser comme polyamide de haute fluidité un polyamide étoile comprenant des chaînes macromoléculaires étoiles et le cas échéant des chaînes macromoléculaires linéaires. Les polymères comprenant de telles chaînes macromoléculaires étoiles sont par exemple décrits dans les documents WO97/24388 et WO99/64496.

Ces polyamides étoiles sont notamment obtenus par mélange en polymérisation, en présence des monomères de polyamide, un aminoacide ou lactame tel que le caprolactame, d'au moins un composé multifonctionnel comprenant au moins 3 fonctions réactives identiques de type fonction amine ou fonction acide carboxylique. Par acide carboxylique, on entend les acides carboxyliques et leurs dérivés, tels que les anhydrides d'acide, les chlorures d'acide et les esters, par exemple. Par amine, on entend les amines et leurs dérivés capables de former une liaison amide.

De préférence, les composés multifonctionnels sont choisis dans le groupe comprenant : la 2,2,6,6-tetrakis-(β-carboxyéthyl)-cyclohexanone, l'acide trimésique, la 2,4,6-tri-(acide aminocaproique)-1,3,5-triazine (TACT) et la 4-aminoéthyle-1,8-octanediamine, la bis-hexaméthylène triamine, le diaminopropane - N,N,N',N' acide tétraacétique, l'acide 3,5,3',5'-biphényltétracarboxylique, les acides dérivés de la phtalocyanine et de la naphtalocyanine, l'acide 3,5,3',5'-biphényltétracarboxylique, l'acide 1,3,5,7-naphtalènetétracarboxylique, l'acide 2,4,6-pyridinetricarboxylique, l'acide 3,5,3',5'-bipyridyltétracarboxylique, l'acide 3,5,3',5'-benzophénonetétracarboxylique, l'acide 1,3,6,8-acridinetétracarboxylique, l'acide trimésique, l'acide 1,2,4,5-benzènetétracarboxylique, diéthylènetriamine, les trialkylènetétramines et tétraalkylènepentamines, l'alkylène étant de préférence l'éthylène, la mélamine, et les polyalkylèneamines, tels que par exemple les Jeffamines T® de la société Huntsman, notamment la Jeffamine T403® (polyoxypropylènetriamine).

La composition selon l'invention peut comprendre entre 20 et 80 % en poids, préférentiellement entre 20 et 60 % en poids, et plus préférentiellement entre 35 et 55% en poids de polyamide, par rapport au poids total de la composition.

La polymérisation du polyamide de l'invention est notamment réalisée selon les conditions opératoires classiques de polymérisation des polyamides, de manière continue ou discontinue.

Un tel procédé de polymérisation peut comprendre brièvement :
- un chauffage sous agitation et sous pression du mélange des monomères du polyamide, et éventuellement des composés multifonctionnels ; difonctionnels et/ou monofonctionnels,
- un maintien du mélange sous pression et température pendant une durée déterminée, avec élimination de vapeur d'eau par un dispositif approprié, puis décompression et maintien pendant une durée déterminée à une température supérieure au point de fusion du mélange, notamment sous pression autogène de vapeur d'eau, sous azote ou sous vide, pour ainsi continuer la polymérisation par élimination de l'eau formée.

En sortie de polymérisation, le polymère peut être refroidi avantageusement par de l'eau, et extrudé sous forme de joncs. Ces joncs sont coupés pour produire des granulés.

La composition selon l'invention peut comprendre entre 20 et 80 % en poids, préférentiellement entre 20 et 60 % en poids, et plus préférentiellement entre 35 et 55% en poids de polyamide, par rapport au poids total de la composition.

L'oxyde de cuivre peut être ajouté de diverses manières pour réaliser la composition selon l'invention. Il peut notamment être ajouté en début, en cours ou en fin de polymérisation du polyamide, notamment pour les polyamides de type 66. Il peut aussi être ajouté en mélange avec le polyamide.

La composition peut également comprendre des charges classiquement utilisées pour la réalisation de compositions polyamides. On peut notamment citer les charges fibreuses de renfort, telles que telles que des fibres de verre, des fibres de carbone, ou des fibres organiques, les charges non fibreuses, telles que des charges particulaires, lamellaires et/ou les nanocharges exfoliables ou non exfoliables comme l'alumine, le noir de carbone, les argiles, le phosphate de zirconium, le kaolin, le carbonate de calcium, le cuivre, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

On préfère notamment utiliser les fibres de renfort, telles que les fibres de verre. De façon préférentielle, la fibre la plus utilisé est la fibre de verre, de type dit coupé (chopped), ayant un diamètre compris entre 7 et 14 µm et une longueur inférieure à 5 mm. Ces charges peuvent présenter un ensimage surfacique qui assure l'adhésion mécanique entre les fibres et la matrice polyamide.

La composition selon l'invention peut comprendre ou non des agents modificateurs du choc, notamment ceux présentant une base élastomérique comprenant des groupements fonctionnels réactifs avec le polyamide.

La composition peut comprendre, outre le polyamide modifié de l'invention, un ou plusieurs autres polymères, de préférence polyamides ou copolyamides.

La composition selon l'invention peut en outre comprendre des additifs usuellement utilisés pour la fabrication de compositions polyamides. Ainsi, on peut citer les lubrifiants, les agents ignifugeants, les plastifiants, les agents nucléants, les catalyseurs, les stabilisants lumière et/ou thermique, les antioxydants, les antistatiques, les colorants, les matifiants, les additifs d'aide au moulage ou autres additifs conventionnels.

Ces charges et additifs peuvent être ajoutés au polyamide modifié par des moyens usuels adaptés à chaque charge ou additif, tel que par exemple lors de la polymérisation ou en mélange en fondu.

Les compositions polyamides sont généralement obtenues par mélange des différents composés entrant dans la composition, notamment le polyamide, l'oxyde de cuivre et le KBr, à froid ou en fondu. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée. De tels dispositifs sont parfaitement connus de l'homme du métier.

Selon un premier mode de réalisation, on mélange tous les composés en phase fondue au cours d'une unique opération, par exemple au cours d'une opération d'extrusion. On peut par exemple procéder à un mélange de granulés des matériaux polymériques, les introduire dans le dispositif d'extrusion afin de les fondre et de les soumettre à un cisaillement plus ou moins important.

On peut, selon des modes de réalisations particuliers, effectuer des pré-mélanges, en fondu ou non, de certains des composés avant préparation de la composition finale.

La composition selon l'invention, lorsqu'elle est préparée à l'aide d'un dispositif d'extrusion est de préférence conditionnée sous forme de granulés. Les granulés sont destinés à être mis en forme à l'aide de procédés impliquant une fusion pour l'obtention d'articles. Les articles sont ainsi constitués de la composition. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de mise en forme, notamment de moulage par injection.

La composition selon l'invention peut être utilisée pour tout procédé de mise en forme des matières plastiques, tels que par exemple le procédé de moulage, notamment le moulage par injection, l'extrusion, l'extrusion soufflage, ou encore le rotomoulage.

La présente invention concerne également des articles obtenus par mise en forme de la composition selon l'invention, par exemple par extrusion, moulage, ou moulage par injection. On peut citer comme article ceux utilisés dans le domaine de l'automobile, comme des réservoirs, des parties de circuits d'air tels que des répartiteurs d'air, des conduites d'air, des conduites de sortie turbo, et des parties de circuits de refroidissement tels que des refroidisseur d'air, des boites à eaux et des boitiers.

La présente invention a aussi pour objet un mélange comprenant au moins un oxyde de cuivre et du KBr. Ce mélange peut par exemple comprendre que ces deux composés, notamment sous forme de poudre. Ce mélange peut également comprendre du polyamide et au moins de l'oxyde de cuivre et du KBr, notamment pour constituer un mélange maitre.

Des termes spécifiques sont utilisés dans la description de manière à faciliter la compréhension du principe de l'invention. Il doit néanmoins être compris qu'aucune limitation de la portée de l'invention n'est envisagée par l'utilisation de ces termes spécifiques. Le terme et/ou inclut les significations et, ou, ainsi que toutes les autres combinaisons possibles des éléments connectés à ce terme.

D'autres détails ou avantages de l'invention apparaîtront plus clairement au vu des exemples ci-dessous, donnés uniquement à titre indicatif.

### PARTIE EXPERIMENTALE

Les composés utilisés sont les suivants :
- Polyamide 66 : PA 66 de viscosité moyenne 140 en acide formique de la société RHODIA
- Cu₂O : de la société FLUKA
- KBr: de la société FLUKA
- CuI : de la société FLUKA
- KI: de la société FLUKA
- Fibres de verre : 99B de la société VETROTEX
- Elastomère : Exxelor VA 1803 de la société EXXON
- Autres additifs : lubrifiant, pigment...

On fabrique les compositions par mélange en fondu en utilisant une extrudeuse double vis co-rotative WERNER&PLEIFEDER ZSK 40 selon les conditionnes suivantes : Vitesse de vis : 250 rpm, Débit : 40 Kg/h, Profil de températures : de 250 à 280°C, Dégazage : 0,9 bar. On mélange le polyamide, 50 % en poids de fibres de verre, 5 % d'élastomères, 0,2% d'additifs, et une certaine proportion d'agents stabilisants tel que mentionné dans le tableau suivant. Les agents stabilisants sont ajoutés en début d'extrudeuse.

Les granulés obtenus sont alors moulés avec une PRESSE : DEMAG ERGOTEC VIVA 50-270 selon les conditionnes suivantes : Profil de températures : 280-300 °C, Température de moule : 90-100 °C, Vitesse de la vis : 120 tpm, Vitesse injection : 80 cm³/s, Contre pression : 10 bar.

Les résultats des propriétés de maintien des propriétés mécaniques avant et après un test de vieillissement sont mentionnés dans le tableau suivant :

**Tableau 1**

| **COMPOSITIONS** | **RESISTANCE A L'IMPACT AVANT VIEILLISSEMENT** | **RESISTANCE A L'IMPACT APRES VIEILLISSEMENT** |
|---|---|---|
| C1/ sans agent stabilisant | 65 | 10 |
| C2/ 0,08% CuI + 0,45 % KI | 65 | 22 |
| 3/ 0,06 % Cu₂O | 67 | 18 |
| 4/ 0,06% Cu₂O + 0,45% KBr | 69 | 27 |

Les pourcentages sont exprimés en poids par rapport au poids du polyamide de la composition.

La résistance à l'impact (Charpy non entaillé) est mesurée selon la norme ISO179-1/1Fu. Le vieillissement est effectué sous air ambiant à 200°C pendant 31 jours et ensuite 7 jours à 220°C.

## Revendications

1. Composition comprenant au moins une matrice polyamide, un oxyde de cuivre et du KBr, **caractérisée en ce que** l'oxyde de cuivre est du Cu₂O et **en ce qu'**elle comprend de 0,009 % à 1,2 % en poids de Cu₂O et de 0,1 à 1,2 % en poids de KBr, par rapport au poids total du polyamide.

2. Composition selon la revendication 1, **caractérisée en ce qu'**elle comprend d'autres agents stabilisants à la chaleur et/ou la lumière tels que le KI, les composés phénoliques encombrés, des stabilisants présentant au moins un motif amine encombrée de type HALS, ou des stabilisants phosphorés organiques ou inorganiques, tel que de l'hypophosphite de sodium ou de manganèse.

3. Composition selon la revendication 1 ou 2, **caractérisée en ce que** le polyamide est un polyamide de type 6 ou un polyamide de type 66.

4. Composition selon l'une quelconque des revendications 1 à 3, **caractérisée en ce que** le polyamide présente une viscosité apparente en phase fondue comprise entre 30 et 1200 Pa.s, mesuré selon la norme ISO 11443 à un taux de cisaillement de 1000 s⁻¹ et une température de 250°C, pour les polyamide de type 6 ; ou une viscosité apparente en phase fondue comprise entre 30 et 700 Pa.s, mesuré selon la norme ISO 11443 à un taux de cisaillement de 1000 s⁻¹ et une température de 280°C, pour les polyamide de type 66.

5. Composition selon l'une quelconque des revendications 1 à 4, **caractérisée en ce qu'**elle comprend entre 20 et 80 % en poids, préférentiellement entre 20 et 60 % en poids, et plus préférentiellement entre 35 et 55% en poids de polyamide, par rapport au poids total de la composition.

6. Composition selon l'une quelconque des revendications 1 à 5, **caractérisée en ce qu'**elle comprend des charges de renfort fibreuses ou non fibreuses.

7. Composition selon l'une quelconque des revendications 1 à 6, **caractérisée en ce qu'**elle comprend des fibres de verre.

8. Composition selon l'une quelconque des revendications 1 à 7, **caractérisée en ce qu'**elle comprend des agents modificateurs du choc.

9. Procédé de fabrication d'une composition selon l'une quelconque des revendications 1 à 8 dans lequel on mélange les différents composés entrant dans la composition, notamment le polyamide, l'oxyde de cuivre et le KBr, à froid ou en fondu.

10. Article obtenu par mise en forme de la composition selon l'une quelconque des revendications 1 à 8.

## Patentansprüche

1. Zusammensetzung, umfassend mindestens eine Polyamidmatrix, ein Kupferoxid und KBr, **dadurch gekennzeichnet, dass** es sich bei dem Kupferoxid um Cu₂O handelt und dass sie 0,009 bis 1,2 Gew.-% Cu₂O und 0,1 bis 1,2 Gew.-% KBr, bezogen auf das Gesamtgewicht des Polyamids, umfasst.

2. Zusammensetzung nach Anspruch 1, **dadurch gekennzeichnet, dass** sie andere Wärme- und/oder Lichtstabilisatoren wie KI, gehinderte Phenolverbindungen, Stabilisatoren mit mindestens einer gehinderten Amin-Einheit vom HALS-Typ oder organische oder anorganische phosphorhaltige Stabilisatoren, wie Natrium- oder Manganhypophosphit, umfasst.

3. Zusammensetzung nach Anspruch 1 oder 2, **dadurch gekennzeichnet, dass** es sich bei dem Polyamid um ein Polyamid vom Typ 6 oder ein Polyamid vom Typ 66 handelt.

4. Zusammensetzung nach einem der Ansprüche 1 bis 3, **dadurch gekennzeichnet, dass** das Polyamid eine gemäß ISO-Norm 11443 bei einer Scherrate von 1000 s⁻¹ und einer Temperatur von 250 °C gemessene scheinbare Schmelzeviskosität zwischen 30 und 1200 Pa.s für Polyamide vom Typ 6 oder eine gemäß ISO-Norm 11443 bei einer Scherrate von 1000 s⁻¹ und einer Temperatur von 280 °C gemessene scheinbare Schmelzeviskosität zwischen 30 und 700 Pa.s für Polyamide vom Typ 66 aufweist.

5. Zusammensetzung nach einem der Ansprüche 1 bis 4, **dadurch gekennzeichnet, dass** sie zwischen 20 und 80 Gew.-%, vorzugsweise zwischen 20 und 60 Gew.-% und weiter bevorzugt zwischen 35 und 55 Gew.-% Polyamid, bezogen auf das Gesamtgewicht der Zusammensetzung, umfasst.

6. Zusammensetzung nach einem der Ansprüche 1 bis 5, **dadurch gekennzeichnet, dass** sie faserförmige oder nicht faserförmige verstärkende Füllstoffe umfasst.

7. Zusammensetzung nach einem der Ansprüche 1 bis 6, **dadurch gekennzeichnet, dass** sie Glasfasern umfasst.

8. Zusammensetzung nach einem der Ansprüche 1 bis 7, **dadurch gekennzeichnet, dass** sie Schlagzähigkeitsmodifikatoren umfasst.

9. Verfahren zur Herstellung einer Zusammensetzung nach einem der Ansprüche 1 bis 8, bei dem die verschiedenen Verbindungen, die in die Zusammensetzung Eingang finden, insbesondere das Polyamid, das Kupferoxid und das KBr, in der Kälte oder in der Schmelze gemischt werden.

10. Artikel, erhalten durch Formen der Zusammensetzung nach einem der Ansprüche 1 bis 8.

## Claims

1. Composition comprising at least one polyamide matrix, a copper oxide and KBr, **characterized in that** the copper oxide is Cu₂O and **in that** it comprises from 0.009% to 1.2% by weight of Cu₂O and 0.1% to 1.2% by weight of KBr, relative to the weight of the polyamide.

2. Composition according to Claim 1, **characterized in that** it comprises other heat and/or light stabilizers such as KI, hindered phenolic compounds, stabilizers having at least one hindered amine unit of HALS type, or organic or inorganic phosphorus-containing stabilizers, such as sodium or manganese hypophosphite.

3. Composition according to Claim 1 or 2, **characterized in that** the polyamide is a polyamide of PA-6 type or a polyamide of PA-6,6 type.

4. Composition according to any one of Claims 1 to 3, **characterized in that** the polyamide has an apparent melt viscosity between 30 and 1200 Pa.s, measured according to the ISO 11443 standard at a shear rate of 1000 s⁻¹ and a temperature of 250°C, for polyamides of PA-6 type ; or an apparent melt viscosity between 30 and 700 Pa.s, measured according to the ISO 11443 standard at a shear rate of 1000 s⁻¹ and a temperature of 280°C, for polyamides of PA-6,6 type.

5. Composition according to any one of Claims 1 to 4, **characterized in that** it comprises between 20 and 80% by weight, preferably between 20 and 60% by weight, and more preferably between 35 and 55% by weight of polyamide relative to the total weight of the composition.

6. Composition according to any one of Claims 1 to 5, **characterized in that** it comprises fibrous and nonfibrous reinforcing fillers.

7. Composition according to any one of Claims 1 to 6, **characterized in that** it comprises glass fibers.

8. Composition according to any one of Claims 1 to 7, **characterized in that** it comprises impact modifiers.

9. Process for manufacturing a composition according to any one of Claims 1 to 8, in which the various compounds being incorporated into the composition, especially the polyamide, the copper oxide and the KBr are cold-blended or melt-blended.

10. Article obtained by forming the composition according to any one of Claims 1 to 8.
